# NEUE EUROPÄISCHE PATENTSCHRIFT

(11) **EP 3 242 806 B2**
(45) Veröffentlichungstag und Bekanntmachung des Hinweises auf die Entscheidung über den Einspruch: **16.07.2025**
(45) Hinweis auf die Patenterteilung: 21.07.2021
(21) Anmeldenummer: 15795205.2
(22) Anmeldetag: 18.11.2015
(51) Int. Cl.: B60G 15/12, B60G 11/28, F16F 9/05, F16F 9/54

(54) **VERBUNDBAUTEIL SOWIE LUFTFEDERKOMPONENTE MIT EINEM DERARTIGEN VERBUNDBAUTEIL**
COMPOSITE PART AND AIR SPRING COMPONENT CONTAINING SUCH A COMPOSITE PART
PIÈCE COMPOSITE ET ÉLÉMENT RESSORT PNEUMATIQUE COMPRENANT UNE TELLE PIÈCE COMPOSITE

(30) Priorität: 09.01.2015 DE 102015100281
(43) Veröffentlichungstag der Anmeldung: 15.11.2017
(73) Patentinhaber: Vibracoustic SE, 64293 Darmstadt (DE)
(72) Erfinder: DERR, Sergej, 21423 Winsen (Luhe) (DE); HECHENBLAIKNER, Jörg, 21376 Salzhausen (DE)
(74) Vertreter: Patentanwälte Olbricht Buchhold Keulertz
(86) Internationale Anmeldenummer: PCT/EP2015/076984
(87) Internationale Veröffentlichungsnummer: WO 2016/110357

(56) Entgegenhaltungen:
- EP-A1- 1 426 648
- EP-A1- 2 031 268
- EP-A2- 1 602 468
- EP-A2- 2 153 977
- EP-A2- 2 775 162
- WO-A1-01/61207
- WO-A1-2015/086315
- DE-A1- 10 347 934
- DE-A1- 102004 015 881
- DE-A1- 102004 061 989
- DE-A1- 102006 010 815
- DE-A1- 102007 026 826
- DE-A1- 102007 035 640
- DE-A1- 102007 035 640
- DE-A1- 102008 048 793
- DE-A1- 102009 049 047
- DE-A1- 102010 004 204
- DE-A1- 102011 050 103
- DE-A1- 102012 012 902
- DE-A1- 102012 110 112
- DE-A1- 102013 212 982
- DE-A1- 102013 212 982
- DE-A1- 102013 219 912
- DE-C1- 10 216 175
- DE-U1- 20 210 955
- DE-U1- 20 210 955
- JP-A- 2009 127 682
- JP-B2- 3 169 153
- JP-B2- 4 948 004
- US-A1- 2007 096 374
- US-A1- 2012 291 626

## Beschreibung

Die vorliegende Erfindung betrifft ein Verbundbauteil für eine Luftfederkomponente eines Kraftfahrzeugs, insbesondere für einen Luftfedertopf eines Luftfederbeins eines Kraftfahrzeuges. Ferner betrifft die Erfindung eine Luftfederkomponente mit einem derartigen Verbundbauteil.

Luftfedern dienen zur Abfederung zweier zueinander beweglicher Fahrzeugteile, aber auch zur Veränderung der Niveaulager eines Fahrzeugs. Luftfedern weisen einen mit Luft gefüllten Luftfederbalg aus Gummi auf, der luftdicht durch ein oberes Abschlusselement und einen Abrollkolben abgeschlossen ist. Das Abschlusselement und der Abrollkolben werden auch als Luftfederkomponenten bezeichnet. Über die Luftfederkomponenten erfolgt die Anbindung der Luftfeder an einem Kraftfahrzeugteil, wie beispielsweise der Fahrzeugkarosserie und/oder dem Fahrwerk. Die Luftfederkomponente kann dabei aus mehreren Teilen gebildet sein, die miteinander verbunden sind.

Daneben finden Luftfedern in Kombination mit einem Schwingungsdämpfer in Luftfederbeinen Anwendung. Dabei übernimmt die Luftfeder die Federungsfunktion und der Schwingungsdämpfer die Dämpfungsfunktion. Zumeist werden als Schwingungsdämpfer Teleskopdämpfer verwendet, die einen mit Öl gefüllten Zylinder aufweisen, wobei eine Kolbenstange in den Zylinder einfährt und durch das Öl gedämpft wird. Die Luftfeder ist endseitig an dem Schwingungsdämpfer angeordnet und mit der Kolbenstange verbunden. Das obere Abschlusselement der Luftfeder ist dabei als Luftfedertopf ausgebildet, der über eine Anschlusseinrichtung zum Anschließen eines Kompressors verfügt. Über den Luftfedertopf erfolgt die Anbindung an einem Fahrzeugteil.

Somit müssen Luftfederkomponenten und ihre Bestandteile eine ausreichende Festigkeit für die Kraftübertragung und zugleich eine ausreichende Dichtheit aufweisen.

Aus WO 01/61207 A1 geht eine Luftfeder mit einem Abrollkolben hervor, der auf einer Unterseite eine hohle Aufnahmeöffnung aufweist, in die ein Bolzen oder eine Schraube aufnehmbar beziehungsweise einschraubbar ist

Ferner geht aus DE 10 2011 050 103 A1 ein zweiteiliger Abrollkolben hervor, der ein Verbindungselement aufweist, das als in das Kunststoffmaterial des Kolbens eingespritzter metallischer Gewindebolzen ausgebildet ist.

DE 10 2007 035 640 A1 offenbart einen Abrollkolben mit einem Unterteil, an dessen Boden eine Befestigungsaufnahme zentrisch angeformt ist, wobei in die Befestigungsaufnahme eine Mutter eingelegt werden kann.

Darüber hinaus geht aus EP 2 031 268 A1 ein Abrollkolben hervor, der einen Befestigungsabschnitt aufweist, in den eine Gewindebuchse aus Metall eingeschraubt ist.

US 2012/0291626 A1 offenbart einen Abrollkolben mit einer zentralen Öffnung, in die ein Befestigungselement stoffschlüssig eingebracht ist, um den Abrollkolben an dem Kraftfahrzeugteil zu befestigen.

DE 202 10 955 U1 beschreibt eine gattungsgemäße Luftfeder eines Kraftfahrzeugs. Die Luftfeder umfasst ein oberes Verbindungselement. Das Verbindungselement weist eine ebene Scheibe aus Metall auf. Zudem umfasst das Verbindungselement einen Teller aus Kunststoff, zum Beispiel aus glasfaserverstärktem Nylon, der die Scheibe umgibt.

DE 10 2013 212982 A1 betrifft einen Luftfederdeckel, der als Verbundbauteil ausgeführt ist. Er umfasst einen oberen, an der Fahrzeugkarosserie befestigten Teil und wenigstens einen unteren Teil, an welchem ein Luftfederbalg luftdicht befestigt ist. Der obere Teil kann ein Aluminiumgussteil sein und der untere Teil ist aus Stahl ausgebildet.

Der Erfindung liegt die Aufgabe zugrunde, ein Verbundbauteil für eine Luftfederkomponente sowie eine Luftfederkomponente zu schaffen, die sowohl eine verbesserte Festigkeit für die Kraftübertragung und gleichzeitig eine verbesserte Dichtheit aufweisen.

Zur Lösung der Aufgabe werden ein Verbundbauteil sowie eine Luftfederkomponente mit den Merkmalen der unabhängigen Ansprüche vorgeschlagen.

Vorteilhafte Ausgestaltungen des Verbundbauteils und der Luftfederkomponente sind Gegenstand der jeweiligen abhängigen Ansprüche.

Das Verbundbauteil für eine als Luftfedertopf ausgebildete Luftfederkomponente eines Kraftfahrzeugs, insbesondere für einen Luftfedertopf eines Luftfederbeins eines Kraftfahrzeuges, weist ein erstes Element aus einem ersten Werkstoff aus Aluminiumdruckguss und ein zweites Element aus einem zweiten Werkstoff aus glasfaserverstärktem thermoplastischem Kunststoff auf, wobei das erste Element als Flansch zur Befestigung an einem Kraftfahrzeugteil ausgebildet ist, und wobei das zweite Element das erste Element zumindest bereichsweise umgibt. Das aus einem ersten Werkstoff gefertigte erste Element weist eine ausreichende Festigkeit auf und dient somit zur Anbindung und Kraftübertragung an einem Fahrzeugteil, wie beispielsweise der Fahrzeugkarosserie oder dem Fahrwerk. Das aus einem zweiten Werkstoff gefertigte und das erste Element zumindest bereichsweise umgebende zweite Element sorgt für eine ausreichende Dichtheit, insbesondere Gasdichtheit, des Verbundbauteils, so dass das Verbundbauteil für Luftfederanwendungen geeignet ist. Über den Flansch erfolgt die Kraftübertragung auf ein Kraftfahrzeugteil. Das Verbundbauteil kann auch als Hybridbauteil bezeichnet werden. Bevorzugt ist das Verbundbauteil mit weiteren Bauteilen zur Bildung einer Luftfederkomponente, insbesondere eines Luftfedertopfes, verbindbar. Das erste Element kann einteilig oder mehrteilig ausgebildet sein.

Erfindungsgemäß ist der erste Werkstoff Aluminiumdruckguss. Ein aus Aluminiumdruckguss gebildeter Flansch weist eine ausreichende Festigkeit zur Kraftübertragung auf. Das erste Element kann ein Tiefziehteil oder ein Drehteil sein.

Erfindungsgemäß ist zudem der zweite Werkstoff ein thermoplastischer glasfaserverstärkter Kunststoff, insbesondere ein spritzfähiger thermoplastischer Kunststoff. Der thermoplastische Kunststoff sorgt für die Sicherstellung einer ausreichenden Dichtheit eines aus Metall, insbesondere Aluminiumdruckguss, hergestellten ersten Elementes. Als thermoplastischer Kunststoff wird bevorzugt PA 66 GF 30 verwendet.

In einer vorteilhaften Ausgestaltung ist das zweite Element stoffschlüssig und/oder formschlüssig mit dem ersten Element verbunden. Bevorzugt ist das zweite Element durch bereichsweises und/oder vollständiges Umspritzen des ersten Elements mit dem zweiten Element mit dem ersten Element verbunden. Hierzu kann das erste Element in eine Spritzgussform eingelegt werden und mit dem zweiten Element bereichsweise und/oder vollständig umspritzt werden, so dass das zweite Element stoffschlüssig mit dem ersten Element verbunden ist. Ferner kann das zweite Element als separates Bauteil hergestellt sein und mit dem ersten Element durch Kraftschluss, Formschluss und/oder Stoffschluss verbunden sein. So kann das zweite Element auf das erste Element aufgepresst und/oder mit dem ersten Element verschweißt sein.

Erfindungsgemäß ist das zweite Element als Beschichtung ausgebildet. Das zweite Element kann zusätzlich als Verschlusselement ausgebildet sein. Ein als Beschichtung ausgebildetes zweites Element wird zumeist mittels Spritzgießen auf das erste Element aufgetragen beziehungsweise mit diesem verbunden. Ferner kann ein als Beschichtung ausgebildetes zweites Element auch als Anstrich auf das erste Element aufgebracht werden. Ein als Verschlusselement ausgebildetes zweites Element wird bevorzugt im Spritzgussverfahren hergestellt, indem das erste Element in eine Spritzgussform eingelegt und mit dem zweiten Element umspritzt wird, wobei das zweite Element das Verschlusselement ausbildet. Dabei übernimmt das zweite Element die Funktion eines Deckelelementes, um einen Luftfedertopf abzuschließen.

Das zweite Element kann wenigstens einen Fügebereich zum Verbinden mit einem zweiten Bauteil aufweisen. Über den Fügebereich wird ein zweites Bauteil, wie beispielsweise ein Unterteil, ein Mittelteil und/oder Zwischenteil zur Bildung einer Luftfederkomponente, insbesondere eines Luftfedertopfes, mit dem Verbundbauteil verbunden. Vorteilhaft ist das Verbundbauteil stoffschlüssig mit dem zweiten Bauteil verbunden. Weiterhin vorteilhaft ist das Verbundbauteil mit dem zweiten Bauteil verschweißt. Vorteilhaft erfolgt das Verschweißen unter inerter Atmosphäre. Hierzu werden die Fügebereiche des Verbundbauteils und des zweiten Bauteils unter inerter Atmosphäre zunächst erwärmt und anschließend verpresst.

In einer vorteilhaften Ausgestaltung weist der Fügebereich wenigstens einen aufschmelzbaren Vorsprung auf. Die Fügebereiche können direkt während des Umspritzens des ersten Elementes mit dem zweiten Element hergestellt sein. Ferner können die Fügebereiche eben sein, aber auch eine dreidimensionale Ausgestaltung aufweisen. Die aufschmelzbaren Vorsprünge können entweder durch Heißgas, Infrarot, Spiegelaufheizung und/oder Induktion erwärmt und/oder plastifiziert beziehungsweise aufgeschmolzen werden, die dann durch Verpressen und Erstarren mit einem weiteren erwärmten und/oder plastifizierten Fügebereich eine Schweißnaht ausbilden.

Der Fügebereich ist vorteilhaft aus wenigstens einem Randabschnitt, Vorsprung, Rippe und/oder Steg des zweiten Elementes und/oder ersten Elementes gebildet. Bevorzugt ist der Fügebereich aus mehreren Randabschnitten, Vorsprüngen, Rippen und/oder Stege gebildet. Die Rippen und/oder Stege sorgen für eine ausreichende Stabilität und Steifigkeit des Verbundbauteils. Weiterhin vorteilhaft ragen die Rippen und/oder Stege von einer Gehäusewand radial nach innen und/oder außen ab. Dadurch kann das Bauteil so gestaltet werden, dass der Fügebereich bzw. die Verbindungsstelle sowohl am äußeren Umfang als auch am inneren Umfang des Bauteils angeordnet ist. Die Stege und/oder Rippen können eine näherungsweise T-förmige Grundform aufweisen. Dadurch kann die Oberfläche der Fügebereiche vergrößert werden.

Weiterhin vorteilhaft weist das erste Element einen Aufnahmeabschnitt zur Aufnahme eines Einsatzes zur Führung einer Dämpferstange eines Schwingungsdämpfers auf. Vorteilhaft umfasst der Einsatz einen Flansch, der in dem Aufnahmeabschnitt einpressbar ist, ein Führungselement zum Führen der Dämpferstange und eine den Flansch und den Führungsabschnitt miteinander verbindende Membran. Vorteilhaft ist das zweite Element zur Abdichtung im Bereich des Aufnahmeabschnitts angeordnet. Weiterhin vorteilhaft ist das zweite Element zwischen dem ersten Element und dem in den Aufnahmeabschnitt eingepressten Einsatz angeordnet.

Ferner betrifft die Erfindung eine Luftfederkomponente mit einem derartigen Verbundbauteil und wenigstens einem zweiten Bauteil, die stoffschlüssig miteinander verbunden sind. Dadurch wird eine Luftfederkomponente, insbesondere ein Luftfedertopf für eine Luftfeder eines Luftfederbeins eines Kraftfahrzeuges, geschaffen, die eine ausreichende Dichtheit und gleichzeitig eine ausreichende Festigkeit zur Kraftübertragung auf ein Fahrzeugteil aufweist. Ein Luftfederbein weist bevorzugt eine Luftfeder und einen Schwingungsdämpfer auf. Dabei übernimmt die Luftfeder die Federungsfunktion und der Schwingungsdämpfer die Dämpfungsfunktion. Zumeist werden als Schwingungsdämpfer Teleskopdämpfer verwendet, die einen mit Öl gefüllten Zylinder aufweisen, wobei eine Kolbenstange in den Zylinder einfährt und durch das Öl gedämpft wird. Die Luftfeder ist endseitig an dem Schwingungsdämpfer angeordnet und mit der Kolbenstange verbunden. Über die Luftfeder, insbesondere dem Luftfedertopf, erfolgt die Anbindung an einem Fahrzeugteil.

In einer vorteilhaften Ausgestaltung erfolgt der Stoffschluss durch Erwärmen und/oder Aufschmelzen und anschließendem Verpressen von Fügebereichen der Bauteile unter inerter Atmosphäre. Die stoffschlüssige Verbindung der beiden Bauteile unter inerter Atmosphäre ermöglicht, eine aus mehreren Bauteilen bestehende druckführende Luftfederkomponente zu erzeugen, die im Bereich der Verbindungsstellen beziehungsweise Fügebereiche eine ausreichende Dichtheit, Festigkeit sowie Temperatur- und Alterungsbeständigkeit aufweist. Ferner gewährleistet die stoffschlüssige Verbindung unter inerter Atmosphäre eine große gestalterische Freiheit der Fügebereiche beziehungsweise der Verbindungsstellen. Ferner gewährleistet die stoffschlüssige Verbindung unter inerter Atmosphäre eine große gestalterische Freiheit der Fügebereiche beziehungsweise der Verbindungsstellen. Die Fügebereiche können sowohl am äußeren Umfang, insbesondere an den Randabschnitten des Bauteils als auch im Inneren des Bauteils angeordnet sein. Ferner können die Fügebereiche eben ausgebildet sein, aber auch eine dreidimensionale Ausgestaltung aufweisen. Zudem ist vorteilhaft keine Nachbearbeitung der Fügebereiche vor dem Fügen erforderlich. Des Weiteren schützt die inerte Atmosphäre vor einer Verunreinigung der Fügebereiche, da eine Oxidation und/oder Reaktion der zu fügenden Bereiche verhindert wird. Dadurch weist die Schweißnaht eine hohe Festigkeit und Dichtheit auf.

In einer vorteilhaften Ausgestaltung erfolgt das Erwärmen mittels Heißgas, Infrarot, Spiegelaufheizung und/oder Induktion. Vorteilhaft erfolgt die Erwärmung entweder unter Vakuum oder unter Einsatz eines inerten Arbeitsgases, insbesondere Stickstoff, in einer entsprechenden Umhausung.

In einer vorteilhaften Ausgestaltung weißt wenigstens eines der Bauteile eine Schweißnahtabdeckung auf, die einen Fügespalt abdeckt. Weiterhin vorteilhaft ragt die Schweißnahtabdeckung von dem Verbundbauteil und/oder dem zweiten Bauteil ab und liegt in einer korrespondierenden Aussparung des Verbundbauteils und/oder des zweiten Bauteils ein.

Vorteilhaft ist die Schweißnahtabdeckung als eine umlaufende Verdecklippe ausgebildet. Die Verdecklippe ragt dabei von einem der Bauteile, vorzugsweise von dessen Gehäusewand ab. Beim Verpressen der beiden Bauteile kontaktiert die Verdecklippe das andere Bauteil bzw. dessen Gehäusewand und verdeckt dadurch einen Fügespalt. Somit verhindert die Verdecklippe einen Austritt der plastifizierten bzw. aufgeschmolzenen Fügebereiche während des Verpressens. Dadurch ist es nicht mehr erforderlich, die Schweißnaht aufwendig nachzubearbeiten, da eine saubere Außenfläche der Luftfederkomponente geschaffen wird. Weiterhin vorteilhaft ist die Schweißnahtabdeckung als spitz zulaufende Verdecklippe ausgebildet, die in eine korrespondierende Schräge am gegenüberliegenden Bauteil während des Verpressens eingreift. Vorteilhaft wird hierdurch eine weitestgehende glatte Außenfläche geschaffen.

In einer vorteilhaften Ausgestaltung ist das Verbundbauteil als Oberteil ausgebildet und mit einem Unterteil stoffschlüssig zu einem Luftfedertopf verbunden. Weiterhin vorteilhaft ist zwischen dem Oberteil und dem Unterteil ein Mittelteil angeordnet, das stoffschlüssig mit dem Oberteil und dem Unterteil zu einem Luftfedertopf verbunden ist. Dadurch kann eine schaltbare Luftfeder realisiert werden. Vorteilhaft sind das Unterteil und/oder das Mittelteil aus Metall oder aus thermoplastischen Kunststoff, insbesondere aus glasfaserverstärktem thermoplastischem Kunststoff, hergestellt. Als thermoplastischer Kunststoff wird bevorzugt PA66GF30 verwendet. Die aus Kunststoff gefertigten Bauteile tragen zu einer Gewichtsreduzierung und damit einhergehend zu einer Kraftstoffeinsparung bei. Als Metall wird vorteilhaft Aluminium verwendet, das ebenfalls ein vergleichsweise geringes Gewicht aufweist.

Nachfolgend werden das Verbundbauteil und die Luftfederkomponente anhand der beigefügten schematischen Zeichnungen näher erläutert. Hierbei zeigen:
- Fig. 1: einen Längsschnitt durch ein Verbundbauteil gemäß einer ersten Ausführungsform für eine als Luftfedertopf ausgebildete Luftfederkomponente;
- Fig. 2: einen Längsschnitt durch eine als Luftfedertopf ausgebildete Luftfederkomponente gemäß einer ersten Ausführunsgsform mit dem in Fig. 1 gezeigten Verbundbauteil;
- Fig. 3: eine perspektivische Darstellung eines ersten Elements für ein Verbundbauteil;
- Fig. 4: eine perspektivische Darstellung eines Verbundbauteils gemäß einer zweiten Ausführungsform mit dem in Fig. 3 gezeigten ersten Element;
- Fig. 5: eine perspektivische Darstellung der einzelnen Bauteile einer als Luftfedertopf ausgebildeten Luftfederkomponente gemäß einer zweiten Ausführungsform mit dem in Fig. 4 gezeigten Verbundbauteil;
- Fig. 6: eine perspektivische Darstellung der in Fig. 5 gezeigten Bauteile der Luftfederkomponente mit ihren Fügebereichen;
- Fig. 7: eine perspektivische Darstellung der einzelnen Bauteile einer als Luftfedertopf ausgebildeten Luftfederkomponente gemäß einer dritten Ausführungsform mit den in Fig. 4 gezeigten Verbundbauteil;
- Fig. 8: eine perspektivische Darstellung des in Fig. 5 gezeigten Verbundbauteils und Mittelteils mit ihren Fügebereichen;
- Fig. 9: eine perspektivische Darstellung des in Fig. 5 gezeigten Mittelteils und Unterteils mit ihren Fügebereichen;
- Fig. 10: einen vergrößerten Ausschnitt eines Längsschnitts durch einen Fügebereich gemäß einer ersten Ausführungsform; und
- Fig. 11: einen vergrößerten Ausschnitt eines Längsschnitts durch einen Fügebereicht gemäß einer zweiten Ausführungsform.

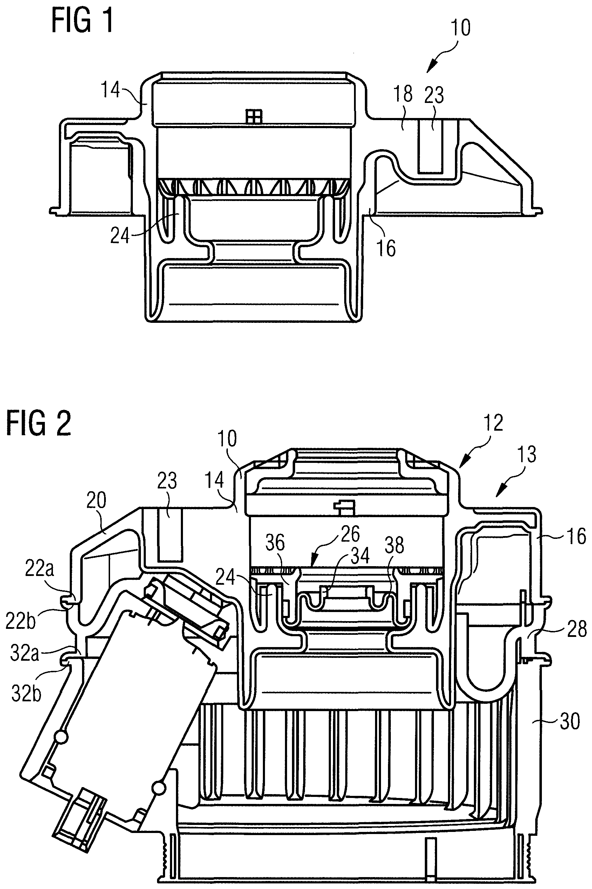

In Fig. 1 ist ein Verbundbauteil 10 gemäß einer ersten Ausführungsform im Längsschnitt dargestellt, das bei einer in Fig. 2 dargestellten Luftfederkomponente 12 gemäß einer ersten Ausführungsform eingesetzt wird. Die Luftfederkomponente 12 ist als Luftfedertopf 13 für eine Luftfeder eines Luftfederbeins eines Kraftfahrzeuges ausgebildet.

Das Verbundbauteil 10, das auch als Hybridbauteil bezeichnet wird, weist ein erstes Element 14 aus einem ersten Werkstoff und ein zweites Element 16 aus einem zweiten Werkstoff auf.

Das erste Element 14 ist als Flansch 18 zur Befestigung an einem nicht dargestellten Kraftfahrzeugteil ausgebildet und ist aus einem Metall, insbesondere Aluminiumdruckguss, hergestellt. Ferner weist das erste Element 14 einen Befestigungsabschnitt 23 zum Befestigen an einem nicht dargestellten Kraftfahrzeugteil und einen Aufnahmeabschnitt 24 zur Aufnahme eines in Fig. 2 dargestellten Einsatzes 26 auf.

Das zweite Element 18 ist als Beschichtung 20 ausgebildet, die das erste Element 14 bereichsweise umgibt. Das zweite Element 18 ist aus einem thermoplastischen Kunststoff, wie beispielsweise PA 66 GF 30. Die Beschichtung 20 ist stoffschlüssig mit dem Flansch 18 verbunden. Hierzu wird der Flansch 18 in eine nicht dargestellte Spritzgussform eingelegt und mit einem thermoplastischen Kunststoff umspritzt. Die Beschichtung 20 sorgt dabei für eine ausreichende Dichtheit des Flansches 18, so dass das Verbundbauteil 10 für eine Luftfederanwendung geeignet ist. Ferner weist das zweite Element 18 einen Fügebereich 22a zum Verbinden mit einem zweiten Bauteil auf. Der Fügebereich 22a wird während des Umspritzens des ersten Elementes 14 mit dem zweiten Element 16 ausgebildet und kann eben oder dreidimensional sein.

Die in Fig. 2 dargestellte Luftfederkomponente 12 weist das Verbundbauteil 10, ein Mittelteil 28 und ein Unterteil 30 auf, die stoffschlüssig zu dem Luftfedertopf 13 miteinander verbunden sind. Das Mittelteil 28 und das Unterteil 30 sind aus einem Kunststoff, insbesondere einem thermoplastischen Kunststoff, wie beispielsweise PA 66 GF 30, hergestellt. Das Mittelteil 28 weist einen zu dem Fügebereich 22a des zweiten Elements 16 korrespondierenden zweiten Fügebereich 22b auf. Ferner weist das Mittelteil 28 einen weiteren Fügebereich 32a auf, der mit einem korrespondierende Fügebereich 32b des Unterteils 30 verbunden ist. Über die Fügebereiche 22a, 22b, 32a, 32b erfolgt die stoffschlüssige Verbindung der Teile 10, 28, 30 zu der Luftfederkomponente 12. So können die Teile 10, 28, 30 mittels Heißgasschweißen miteinander verbunden werden, indem die Fügebereiche 22a, 22b, 32a, 32b erwärmt und/oder aufgeschmolzen bzw. plastifiziert und anschließend zusammengedrückt werden. Nach dem Erstarren der Fügebereiche 22a, 22b, 32a, 32b sind unter Ausbildung einer nicht dargestellten Schweißnaht die Teile 10, 28, 30 stoffschlüssig miteinander verbunden. Beim Heißgasschweißen werden die Fügebereiche 22a, 22b, 32a, 32b mittels eines Heißgases erwärmt und/oder aufgeschmolzen beziehungsweise plastifiziert, wobei bevorzugt Stickstoff als Arbeitsgas verwendet wird.

Ferner wird in den Aufnahmeabschnitt 24 der Einsatz 26 eingepresst. Zur Sicherstellung einer ausreichenden Dichtheit ist der Aufnahmeabschnitt 24 mit der Beschichtung 20 versehen. Der Einsatz 26 weist ein Führungselement 34 zur Führung einer nicht dargestellten Dämpferstange, ein Flanschelement 36 zum Einpressen in den Aufnahmeabschnitt 24 und eine das Führungselement 34 und das Flanschelement 36 miteinander verbindende Membran 32 auf.

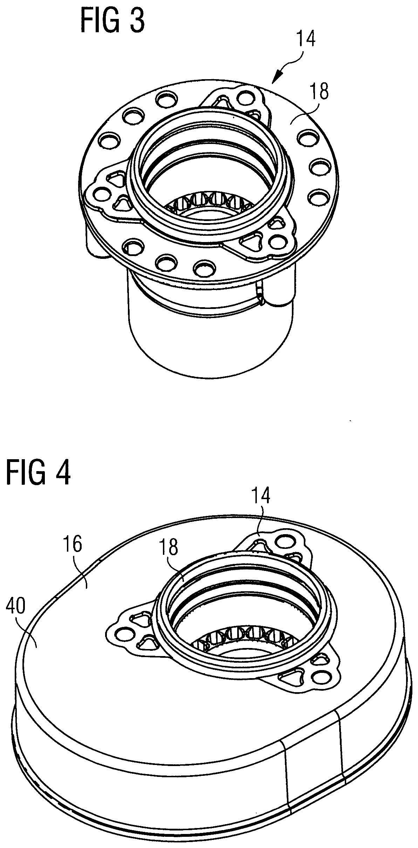

In Fig. 3 ist eine zweite Ausführungsform eines als Flansch 18 ausgebildeten ersten Elementes 14 aus einem Aluminiumdruckguss dargestellt, der in dem in Fig. 4 gezeigten Verbundbauteil 10 gemäß einer zweiten Ausführungsform verwendet wird. Die zweite Ausführungsform des Verbundbauteils 10 unterscheidet sich von der ersten Ausführungsform in der Ausgestaltung des zweiten Elements 16. Das zweite Element 16 ist als Oberteil 40 für einen Luftfedertopf 13 ausgebildet und ist stoffschlüssig mit dem Flansch 18 verbunden. Hierzu wird der Flansch 18 in eine nicht dargestellte Spritzgussform eingelegt und mit einem Kunststoff zur Ausbildung des Oberteils 40 umspritzt.

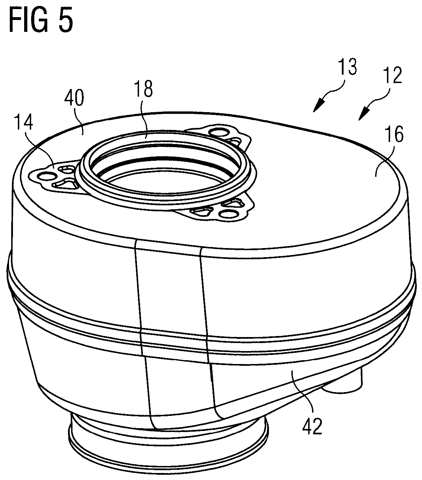

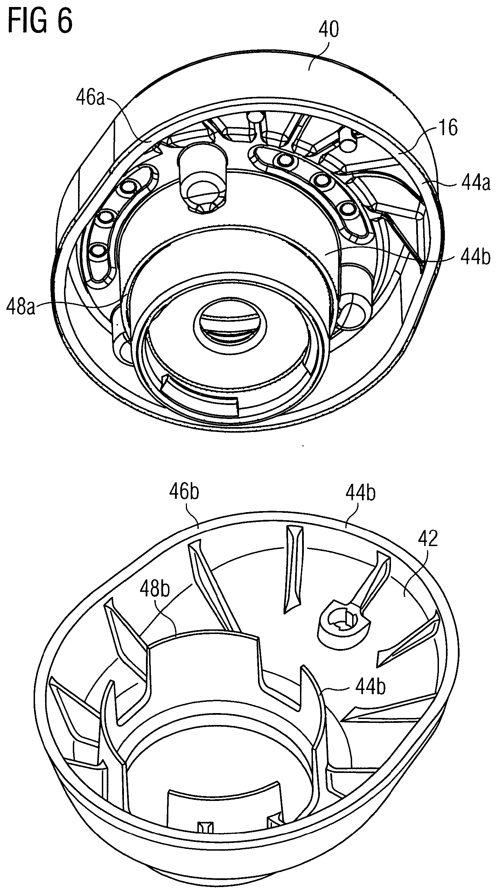

In Fig. 5 ist eine Luftfederkomponente 12 gemäß einer zweiten Ausführungsform mit dem in Fig. 4 gezeigten Verbundbauteil 10 sowie einem Unterteil 42 gezeigt. Das Verbundbauteil 10 und das Unterteil 42 sind stoffschlüssig miteinander verbunden. Wie in Fig. 6 dargestellt ist, weist das Verbundbauteil 10 einen ersten Fügebereich 44a und das Unterteil 42 einen dazu korrespondierenden zweiten Fügebereich 44b auf. Beide Fügebereiche 44a, 44b sind aus einem Randabschnitt 46a, 46b und einem Kreisabschnitt 48a, 48b gebildet. Die Fügebereiche 44a, 44b können mittels Heißgasschweißen stoffschlüssig miteinander verbunden.

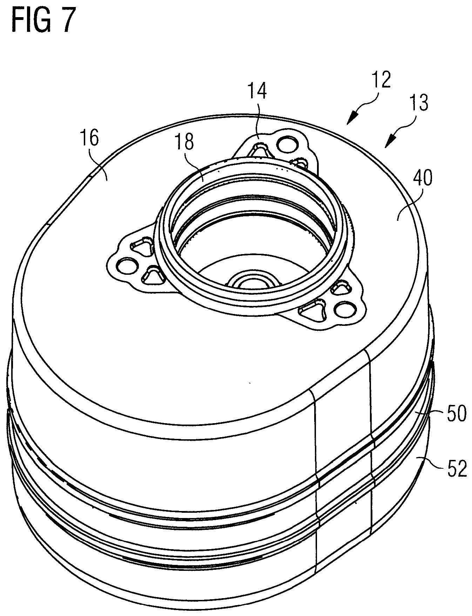

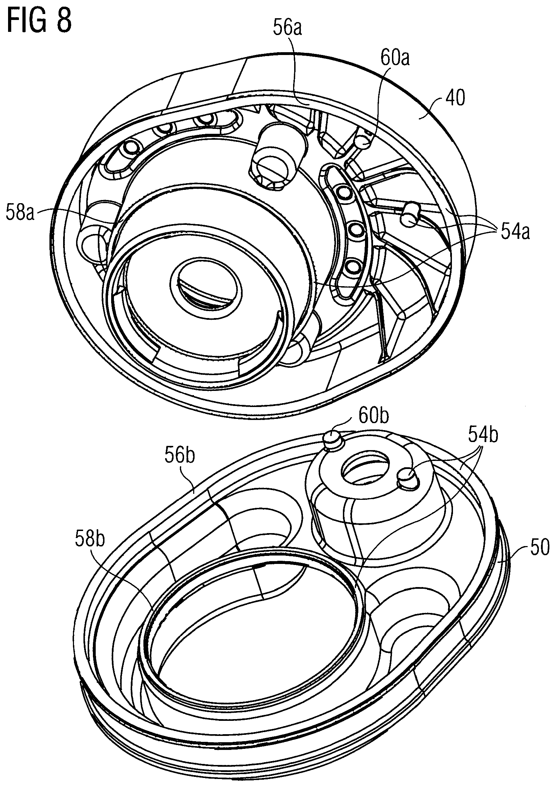

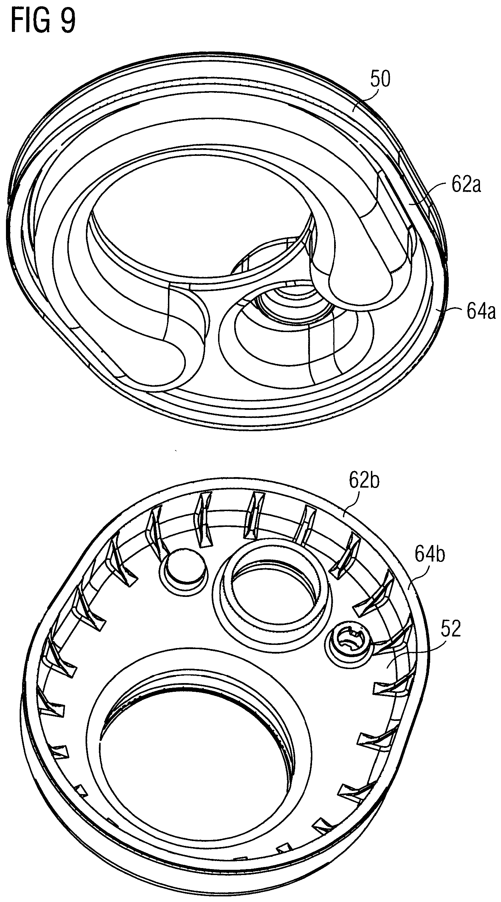

In Fig. 7 ist eine dritte Ausführungsform einer als Luftfedertopf 13 ausgebildeten Luftfederkomponente 12 dargestellt. Die Luftfederkomponente 12 umfasst das in Fig. 4 gezeigte Verbundbauteil 10 ein Mittelteil 50 und ein Unterteil 52, die stoffschlüssig miteinander verbunden sind. Wie in Fig. 8 gezeigt ist, weist das Verbundbauteil 10 einen Fügebereich 54a und das Mittelteil 68 einen dazu korrespondierenden Fügebereich 54b auf, die jeweils aus einem Randabschnitt 56a, 56b einen Kreisabschnitt 58a, 58b und Vorsprüngen 60a, 60b gebildet sind. Ferner weist, wie in Fig. 9 dargestellt ist, das Mitteilteil 50 einen weiteren Fügebereich 62a und das Unterteil 52 einen dazu korrespondierenden Fügebereich 62b auf, die aus Randabschnitten 64a, 64b gebildet sind.

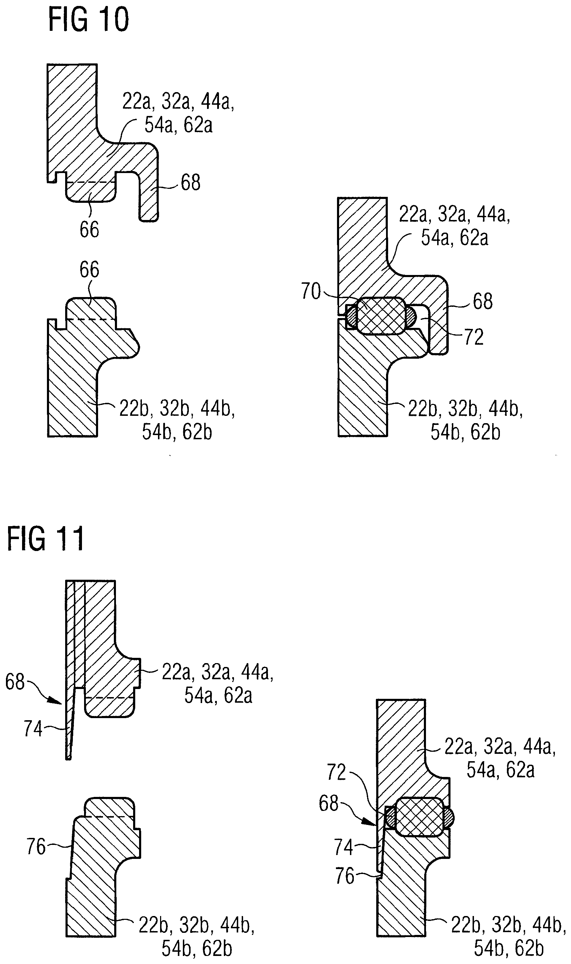

In Fig. 10 ist ein vergrößerter Ausschnitt eines Längsschnitts durch eine erste Ausführungsform der Fügebereiche 22a, 22b, 32a, 32b, 44a, 44b, 54a, 54b, 62a, 62b im Bereich der Randabschnitte 46a, 46b, 56a, 56b dargestellt. Die Fügebereiche 22a, 22b, 32a, 32b, 44a, 44b, 54a, 54b, 62a, 62b weisen jeweils einen aufschmelzbaren Vorsprung 66 auf (linke Darstellung der Fig. 10). Ferner ragt von einem der Fügebereiche 22a, 22b, 32a, 32b, 44a, 44b, 54a, 54b, 62a, 62b eine Schweißnahtabdeckung 68 ab. Die aufschmelzbaren Vorsprünge 66 werden durch Heißgas, Infrarot, Spiegelaufheizung und/oder Induktion erwärmt und/oder aufgeschmolzen bzw. plastifiziert und zusammengedrückt, um so eine Schweißnaht 70 zu erzeugen (rechte Darstellung der Fig. 10). Beim Zusammendrücken kontaktiert die Schweißnahtabdeckung 68 das andere Teil und verdeckt dabei einen Fügespalt 72. Dadurch kann keine Schmelze austreten, so dass eine saubere Außenfläche geschaffen wird.

In Fig. 11 ist vergrößerter Ausschnitt eines Längsschnittes gemäß einer zweiten Ausführungsform der Fügebereiche 22a, 22b, 32a, 32b, 44a, 44b, 54a, 54b, 62a, 62b dargestellt, die sich von der ersten Ausführungsform dadurch unterscheidet, dass die Schweißnahtabdeckung 68 als spitz zulaufende Verdecklippe 74 ausgebildet ist (linke Darstellung der Fig. 11), die nach dem Zusammendrücken in eine Schräge 76 des zweiten Teils eingreift, um so den Fügespalt 72 zu verdecken. Dadurch wird nach außen hin eine glatte Fläche geschaffen.

Das Verbundbauteil 10 zeichnet sich durch seine Kombination aus einem Flansch 18 aus Aluminiumdruckguss und einem den Flansch 18 zumindest bereichsweise umgebenden zweiten Element 16 aus einem thermoplastischen Kunststoff aus. Über den Flansch 18 erfolgt die Anbindung und Kraftübertragung an einem Kraftfahrzeugteil und das zweite Element 18 gewährleistet eine ausreichende Dichtheit des aus Aluminiumdruckguss hergestellten Flansches 18. Dadurch kann das Verbundbauteil 10 in einer Luftfederkomponente, wie beispielsweise in einem Luftfedertopf 13 eines Luftfederbeins, eingesetzt werden. Ferner weist das zweite Element 18 Fügegeometrien zum stoffschlüssigen Verbinden des Verbundbauteils 10 mit weiteren Bauteilen 28, 30, 42, 50, 52 zu einem Luftfedertopf 13 auf.

### Bezugszeichenliste

- 10: Verbundbauteil
- 12: Luftfederkomponente
- 13: Luftfedertopf
- 14: erste Element
- 16: zweite Element
- 18: Flansch
- 20: Beschichtung
- 22a: Fügebereich
- 22b: Fügebereich
- 23: Befestigungsabschnitt
- 24: Aufnahmeabschnitt
- 26: Einsatz
- 28: Mittelteil
- 30: Unterteil
- 32a: Fügebereich
- 32b: Fügebereich
- 34: Führungselement
- 36: Flanschelement
- 38: Membran
- 40: Oberteil
- 42: Unterteil
- 44a: Fügebereich
- 44b: Fügebereich
- 46a: Randabschnitt
- 46b: Randabschnitt
- 48a: Kreisabschnitt
- 48b: Kreisabschnitt
- 50: Mittelteil
- 52: Unterteil
- 54a: Fügebereich
- 54b: Fügebereich
- 56a: Randabschnitt
- 56b: Randabschnitt
- 58a: Kreisabschnitt
- 58b: Kreisabschnitt
- 60a: Vorsprung
- 60b: Vorsprung
- 62a: Fügebereich
- 62b: Fügebereich
- 64a: Randabschnitt
- 64b: Randabschnitt
- 66: Vorsprung
- 68: Schweißnahtabdeckung
- 70: Schweißnaht
- 72: Fügespalt
- 74: Verdecklippe
- 76: Schräge

## Patentansprüche

1. Verbundbauteil (10) für eine als Luftfedertopf ausgebildete Luftfederkomponente (12) eines Kraftfahrzeuges mit einem ersten Element (14) aus einem ersten Werkstoff aus Aluminiumdruckguss und einem zweiten Element (16) aus einem zweiten Werkstoff aus glasfaserverstärktem thermoplastischem Kunststoff, wobei das erste Element (14) als Flansch (18) zur Befestigung an einem Kraftfahrzeugteil ausgebildet ist, und wobei das zweite Element (16) das erste Element (14) zumindest bereichsweise umgibt, **dadurch gekennzeichnet, dass** das zweite Element (16) als Beschichtung (20) ausgebildet ist.

2. Verbundbauteil nach Anspruch 1, **dadurch gekennzeichnet, dass** das zweite Element (16) stoffschlüssig und/oder formschlüssig mit dem ersten Element (14) verbunden ist.

3. Verbundbauteil nach einem der vorhergehenden Ansprüche, **dadurch gekennzeichnet, dass** das zweite Element (16) wenigstens einen Fügebereich (22a, 44a, 54a) zum Verbinden mit einem zweiten Bauteil (28, 42, 50) aufweist.

4. Verbundbauteil nach Anspruch 3, **dadurch gekennzeichnet, dass** der Fügebereich (22a, 44a, 54a) wenigstens einen aufschmelzbaren Vorsprung (66) aufweist.

5. Verbundbauteil nach Anspruch 3 oder 4, **dadurch gekennzeichnet, dass** der Fügebereich (22a, 44a, 54a) aus wenigstens einem Randabschnitt (46a, 56a), Vorsprung (60a), Rippe und/oder Steg gebildet ist.

6. Verbundbauteil nach einem der vorhergehenden Ansprüche, **dadurch gekennzeichnet, dass** das erste Element (14) einen Aufnahmeabschnitt (24) zur Aufnahme eines Einsatzes (26) zur Führung einer Dämpferstange eines Schwingungsdämpfers aufweist.

7. Verbundbauteil nach einem der vorhergehenden Ansprüche, **dadurch gekennzeichnet, dass** der zweite Werkstoff ein spritzfähiger thermoplastischer Kunststoff ist.

8. Luftfederkomponente (12) mit einem Verbundbauteil (10) nach einem der Ansprüche 1 bis 7 und wenigstens einem zweiten Bauteil (28, 42, 50), die stoffschlüssig miteinander verbunden sind.

9. Luftfederkomponente nach Anspruch 8, **dadurch gekennzeichnet, dass** der Stoffschluss durch Erwärmen und/oder Aufschmelzen und anschließendem Verpressen von Fügebereichen (22a, 22b, 44a, 44b, 54a, 54b) der Bauteile (10, 28, 42, 50) unter inerter Atmosphäre erfolgt.

10. Luftfederkomponente nach einem der Ansprüche 8 oder 9, **dadurch gekennzeichnet, dass** wenigstens eines der Bauteile (10, 28, 42, 50) eine Schweißnahtabdeckung (68) aufweist, die einen Fügespalt (72) abdeckt.

11. Luftfederkomponente nach einem der Ansprüche 8 bis 10, **dadurch gekennzeichnet, dass** das Verbundbauteil (10) als Oberteil (10, 40) ausgebildet ist und mit einem Unterteil (30, 42, 52) stoffschlüssig zu einem Luftfedertopf (13) verbunden ist.

12. Luftfederkomponente nach Anspruch 11, **dadurch gekennzeichnet, dass** zwischen dem Oberteil (10, 40) und dem Unterteil (30, 52) ein Mittelteil (28, 50) angeordnet ist, das stoffschlüssig mit dem Oberteil (10, 40) und dem Unterteil (30, 52) zu einem Luftfedertopf (13) verbunden ist.

## Claims

1. Composite component (10) for an air spring component (12) of a motor vehicle in the form of an air spring pot, having a first element (14) made of a first material of die-cast aluminum and a second element (16) made of a second material of glass-fiber-reinforced thermoplastic, the first element (14) being designed as a flange (18) for fastening to a motor vehicle part, wherein at least regions of the second element (16) surround the first element (14) **characterized in that** the second element (16) is designed as a coating (20).

2. Composite component according to claim 1, **characterized in that** the second element (16) is connected to the first element (14) by a material bond and/or by a form fit.

3. Composite component according to one of the preceding claims, **characterized in that** the second element (16) has at least one joining region (22a, 44a, 54a) for joining to a second component (28, 42, 50).

4. Composite component according to claim 3, **characterized in that** the joining region (22a, 44a, 54a) has at least one fusible projection (66).

5. Composite component according to claim 3 or 4, **characterized in that** the joining region (22a, 44a, 54a) is formed from at least one edge section (46a, 56a), projection (60a), rib and/or bar.

6. Composite component according to one of the preceding claims, **characterized in that** the first element (14) has a receiving portion (24) for receiving an insert (26) for guiding a damper rod of a vibration damper.

7. Composite component according to any one of the preceding claims, **characterized in that** the second material is an injection-moldable thermoplastic material.

8. Air spring component (12) comprising a composite component (10) according to any one of claims 1 to 7 and at least one second component (28, 42, 50), which are connected to one another in a materially bonded manner.

9. Air spring component according to claim 8, **characterized in that** the material connection is effected by heating and/or melting and subsequent pressing of joint regions (22a, 22b, 44a, 44b, 54a, 54b) of the components (10, 28, 42, 50) under an inert atmosphere.

10. Air spring component according to one of claims 8 or 9, **characterized in that** at least one of the components (10, 28, 42, 50) has a weld seam cover (68) which covers a joining gap (72).

11. Air spring component according to one of claims 8 to 10, **characterized in that** the composite component (10) is designed as an upper part (10, 40) and is connected to a lower part (30, 42, 52) in a materially bonded manner to form an air spring pot (13).

12. Air spring component according to claim 11, **characterized in that** a middle part (28, 50) is arranged between the upper part (10, 40) and the lower part (30, 52), wherein the middle part (28, 50) is materially connected to the upper part (10, 40) and the lower part (30, 52) to form an air spring pot (13).

## Revendications

1. Composant composite (10) pour un composant de ressort pneumatique (12) d'un véhicule automobile sous la forme d'un pot de ressort pneumatique, avec un premier élément (14) en un premier matériau en aluminium coulé sous pression et un deuxième élément (16) en un deuxième matériau en matière thermoplastique renforcée par de la fibre de verre, le premier élément (14) étant réalisé sous la forme d'une bride (18) pour la fixation à une pièce du véhicule automobile et le deuxième élément (16) entourant au moins par zones le premier élément (14) **caractérisé en ce que** le deuxième élément (16) est conçu comme un élément de revêtement (20).

2. Composant composite selon la revendication 1, caractérisé en ce le deuxième élément (16) est relié matériellement et/ou positivement au premier élément (14).

3. Composant composite selon l'une quelconque des revendications précédentes, **caractérisé en ce que** le deuxième élément (16) comprend au moins une zone de jonction (22a, 44a, 54a) pour la jonction avec un deuxième composant (28, 42, 50).

4. Composant composite selon la revendication 3, **caractérisé en ce que** la zone de jonction (22a, 44a, 54a) présente au moins une saillie fusible (66).

5. Composant composite selon la revendication 3 ou 4, **caractérisé en ce que** la zone de jonction (22a, 44a, 54a) est formée d'au moins une section de bord (46a, 56a), une saillie (60a), une nervure et/ou une bande.

6. Composant composite selon l'une des revendications précédentes, **caractérisé en ce que** le premier élément (14) comprend une portion de réception (24) pour recevoir un insert (26) pour guider une tige d'amortisseur d'un amortisseur de vibrations.

7. Composant composite selon l'une quelconque des revendications précédentes, **caractérisé en ce que** le second matériau est un matériau thermoplastique injectable.

8. Composant de ressort pneumatique (12) comprenant un composant composite (10) selon l'une quelconque des revendications 1 à 7 et au moins un deuxième composant (28, 42, 50), qui sont reliés entre eux par liaison de matière.

9. Composant de ressort pneumatique selon la revendication 8, **caractérisé en ce que** la liaison des matériaux est effectuée par chauffage et/ou fusion et pressage ultérieur des zones de jonction (22a, 22b, 44a, 44b, 54a, 54b) des composants (10, 28, 42, 50) sous une atmosphère inerte.

10. Composant de ressort pneumatique selon l'une des revendications 8 ou 9, **caractérisé en ce qu'**au moins l'un des composants (10, 28, 42, 50) comprend un recouvrement de cordon de soudure (68) couvrant un espace de jonction (72).

11. Composant de ressort pneumatique selon l'une quelconque des revendications 8 à 10, **caractérisé en ce que** le composant composite (10) est réalisé sous la forme d'une partie supérieure (10, 40) et est relié à une partie inférieure (30, 42, 52) par liaison de matière pour former un pot de ressort pneumatique (13).

12. Composant de ressort pneumatique selon la revendication 12, **caractérisé en ce qu'**une partie centrale (28, 50) est disposée entre la partie supérieure (10, 40) et la partie inférieure (30, 52), laquelle partie centrale (28, 50) est reliée matériellement à la partie supérieure (10, 40) et à la partie inférieure (30, 52) pour former un pot de ressort pneumatique (13).
